(19) Europäisches Patentamt
European Patent Office
Office européen des brevets

(11) Veröffentlichungsnummer: **0 290 753**
**B1**

(12) **EUROPÄISCHE PATENTSCHRIFT**

(45) Veröffentlichungstag der Patentschrift: **19.12.90**

(21) Anmeldenummer: **88104302.0**

(22) Anmeldetag: **18.03.88**

(51) Int. Cl.⁵: **C08F 2/32**

(54) **Verfahren zur Herstellung von perlförmigen Polymerisaten aus wasserlöslichen, ethylenisch ungesättigten Monomeren.**

(30) Priorität: **26.03.87 DE 3709921**

(43) Veröffentlichungstag der Anmeldung:
**17.11.88 Patentblatt 88/46**

(45) Bekanntmachung des Hinweises auf die Patenterteilung:
**19.12.90 Patentblatt 90/51**

(84) Benannte Vertragsstaaten:
**BE CH DE ES FR GB IT LI NL**

(56) Entgegenhaltungen:
**FR-A- 2 570 382**

(73) Patentinhaber: **BASF Aktiengesellschaft,
Carl-Bosch-Strasse 38, D-6700 Ludwigshafen(DE)**

(72) Erfinder: **Rehmer, Gerd, Dr., Königsberger Str. 1,
D-6712 Bobenheim-Roxheim(DE)**
Erfinder: **Niessner, Manfred, Dr., Budapester Str. 51,
D-6700 Ludwigshafen(DE)**
Erfinder: **Heide, Wilfried, Dr., Am Wurmberg 16,
D-6713 Freinsheim(DE)**
Erfinder: **Hartmann, Heinrich, Dr., Weinheimer Str. 46,
D-6703 Limburgerhof(DE)**
Erfinder: **Peters, Karl-Clemens, Dr., Otto
Schmidt-Gross-Str. 4, D-6702 Bad Dürkheim(DE)**

**EP 0 290 753 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Das Verfahren der umgekehrten Suspensionspolymerisation, bei dem eine wäßrige Lösung von wasserlöslichen, ethylenisch ungesättigten Monomeren in einer inerten hydrophoben Flüssigkeit suspendiert und darin in Gegenwart eines Polymerisationsinitiators und eines Schutzkolloids zu polymeren Produkten in Perlform polymerisiert wird, ist bekannt, vgl. US-A 2 982 749. Hieraus sind auch verschiedene Arten von Schutzkolloiden bekannt, die die Wasser-in-Öl-Emulsionen stabilisieren und die Größe der Polymerisatperlen beeinflussen. Aus der US-A 4 189 559 ist bekannt, daß man zur Herstellung von Polymerisaten aus wasserlöslichen, ethylenisch ungesättigten Monomeren nach dem Verfahren der umgekehrten Suspensionspolymerisation als Schutzkolloid Reaktionsprodukte verwenden kann, die beispielsweise durch Umsetzung von Ölen und/oder Harzen, die allylständige Wasserstoffatome aufweisen, mit Maleinsäureanhydrid erhältlich sind. Solche Schutzkolloide haben vor allem Bedeutung für die Herstellung von Polyacrylamid bzw. Copolymerisaten aus Acrylamid und Acrylsäure. Aus der US-A 41 64 613 ist bekannt, bei der umgekehrten Suspensionspolymerisation als Schutzkolloid Polymerisate zu verwenden, die erhältlich sind durch thermische oder radikalische Lösungs- oder Substanzpolymerisation aus 60 bis 99,9 Gew.-% Dicyclopentadien, 0 bis 30 Gew.-% Styrol und 0,1 bis 10m Gew.-% Maleinsäureanhydrid. Der Nachteil der bekannten Schutzkolloide liegt darin, daß sie nur für eine begrenzte Auswahl von wasserlöslichen ethylenisch ungesättigten Monomeren gute Resultate liefern. Ein weiterer Nachteil der bekannten Schutzkolloide ist darin zu sehen, daß sie Produkte mit einer sehr breiten Teilchengrößenverteilung liefern.

Der Erfindung liegt die Aufgabe zugrunde, ein Verfahren zur Herstellung von perlförmigen Polymerisaten aus wasserlöslichen, ethylenisch ungesättigten Monomeren durch umgekehrte Suspensionspolymerisation einer Suspension aus einer wäßrigen Lösung der Monomeren in einer inerten hydrophoben Flüssigkeit in Gegenwart von Polymerisationsinitiatoren und Schutzkolloiden zur Verfügung zu stellen, bei dem man Perlpolymerisate mit einer engen Korngrößenverteilung erhält und bei dem die Bildung von Belägen auf dem Rührer und der Innenwand der Polymerisationsapparaturen praktisch nicht mehr auftritt. Die dafür gescuhten Schutzkolloide sollen nach Möglichkeit farblos und geruchlos sein und die wäßrige Suspension auch während langer Polymerisationszeiten stabilisieren.

Die Aufgabe wird erfindungsgemäß gelöst mit einem Verfahren zur Herstellung von perlförmigen Polymerisaten aus wasserlöslichen, ethylenisch ungesättigten Monomeren durch umgekehrte Suspensionspolymerisation einer Suspension aus einer wäßrigen Lösung der Monomeren in einer inerten hydrophoben Flüssigkeit in Gegenwart von Polymerisationsinitiatoren und Schutzkolloiden, wenn man als Schutzkolloid Propfpolymerisate einsetzt, die erhältlich sind durch Pfropfen von Polymerisaten A), die

a) 40 bis 100 Gew.-% monovinylaromatische Monomere,

b) 0 bis 60 Gew.-% monoethylenisch ungesättigte Carbonsäuren mit 3 bis 6 C-Atomen, Maleinsäureanhydrid und/oder Itaconsäureanhydrid und

c) 0 bis 20 Gew.-% andere monoethylenisch ungesättigte Monomere,

mit der Maßgabe einpolymerisiert enthalten, daß die Summe der Gewichtsprozente (a) bis (c) immer 100 beträgt, die Polymerisate A) ein Molekulargewicht (Zahlenmittel) von 500 bis 20 000 und Hydrierjodzahlen (nach DIN 53 241) von 1,3 bis 51 aufweisen, mit Monomermischungen aus

(1) 70 bis 100 Gew.-% Acrylsäureester und/oder Methacrylsäureester von 1 bis 20 C-Atome enthaltenden einwertigen Alkohlen,

(2) 0 bis 15 Gew.-% monoethylenisch ungesättigten Carbonsäuren mit 3 bis 6 C-Atomen, Maleinsäureanhydrid und/oder Itaconsäureanhydrid,

(3) 0 bis 10 Gew.-% Acrylsäuremonoester und/oder Methacrylsäuremonoester von mindestens 2-wertigen Alkoholen,

(4) 0 bis 15 Gew.-% monovinylaromatischen Monomeren und

(5) 0 bis 7,5 Gew.-% Acrylamid und/oder Methacrylamid mit der Maßgabe, daß die Summe der Gewichtsprozente (1) bis (5) immer 100 beträgt.

bie Temperaturen bis zu 150°C in einem inerten hydrophoben Verdünnungsmittel in Gegenwart von Polymerisationsinitiatoren, wobei die Monomeren in einer Menge von 97,5 bis 50 Gew.-%, bezogen auf die Mischung aus Polymerisat A) und Monomeren, eingesetzt werden.

Sämtliche wasserlöslichen ethylenisch ungesättigten Monomeren können nach dem Verfahren der umgekehrten Suspensionspolymerisation polymerisiert werden. Bei diesen Monomeren handelt es sich beispielsweise um ethylenisch ungesättigte $C_3$- bis $C_6$-Carbonsäuren, wie Acrylsäure, Methacrylsäure, Itakonsäure, Maleinsäure, Fumarsäure und Ethacrylsäure sowie um die Amide dieser Carbonsäuren, insbesondere Acrylamid und Methacrylamid, substituierte Amide, wie N-Methylolacrylamid, N-Methylolmethacrylamid, N-Alkoxymethylacrylamid und N-Alkoxymethyl(meth)acrylamid. Die Alkoxygruppe hat dabei 1 bis 4 Kohlenstoffatome. Weitere geeignete wasserlösliche ethylenisch ungesättigte Monomere sind Di-$C_1$- bis $C_3$-Alkylamino-$C_2$- bis $C_6$-Alkyl(meth)acrylate, wie Dimethylaminoethylacrylat, Dimethylaminoethylmethacrylat, Diethylaminoethylacrylat, Diethylaminoethylmethacrylat, Dimethylaminopropylacrylat, Dimethylaminobutylacrylat, Dimethylaminoneopentylacrylat und Dimethylaminoneopentylmethacrylat. Die basischen Acrylate können in Form der Salze mit anorganischen Säuren oder Carbonsäuren mit 1 bis 4 Kohlenstoffatomen oder auch in quaternisierter Form der Polymerisation unterworfen

werden. Geeignet sind auch olefinisch ungesättigte Nitrile, wie Acrylnitril.

Außerdem eignen sich wasserlösliche Diallylammoniumverbindungen der allgemeinen Formeln

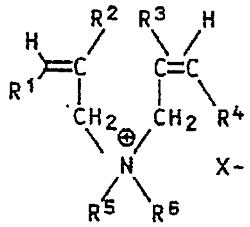

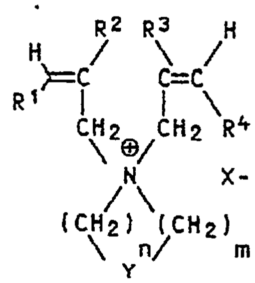

in der $X^-$ für ein Halogenidion, wie Chlorid-, Fluorid-, Bromid- und Iodid- oder ein Hydroxid-, Nitrat-, Methosulfat-, Hydrogensulfat- oder Dihydrogenphosphation steht, n und m ganze Zahlen von 1 bis 2, vorzugsweise n = m =2,

Y = >N-Methyl, >N-Ethyl, vorzugsweise für ein Sauerstoffatom oder eine $>CH_2$-Gruppe, und

$R^1$, $R^2$, $R^3$ und $R^4$ jeweils ein Wasserstoff oder einen Alkylrest mit 1 bis 6 Kohlenstoffatomen und $R^5$ und $R^6$ H oder einen Alkylrest, der geradkettig oder verzweigtkettig sein kann, mit 1 bis 18 Kohlenstoffatomen, vorzugsweise 1 bis 6 Kohlenstoffatomen oder Aryl- und/oder Benzylrest bedeuten.

Derartige diolefinisch ungesättigte Monomere sind z.B. Dimethyldiallylammoniumchlorid, Dimethyldiallylammoniumbromid, Diethyldiallylammoniumchlorid, Methyl-tert.-butyldiallylammoniummethosulfat, Methyl-n-propyldiallylammoniumchlorid, Dimethyldiallylammoniumhydrogensulfat, Dimethyldiallylammoniumdihydrogenphosphat, Di-n-butyl-diallylammoniumbromid, Diallylpiperidiniumbromid, Diallylpyrrolidiniumchlorid und Diallylmorpholiniumbromid.

Geeignet sind auch N-Vinylpyrrolidone, wie N-Vinylpyrrolidon. Als wasserlösliches Monomer kommt auch N-Vinylformamid in Betracht. Es wird entweder allein oder in Mischung mit N-Vinylpyrrolidon, Acrylamid und/oder Methacrylamid in jedem beliebigen Verhältnis der Copolymerisation unterworfen.

Außerdem kommen als wasserlösliche Monomere N-Vinylimidazolium-Verbindungen in Betracht, die beispielsweise mit Hilfe folgender Formel charakterisiert werden können:

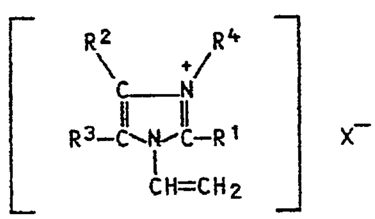

in der $R^1$, $R^2$ und $R^3$ = H, $CH_3$ und $R^1$ außerdem noch $C_2H_5$, $C_3H_7$ und $C_4H_9$ und $R^4$ = H, $C_1$- bis $C_6$-Alkyl-, Benzyl- und

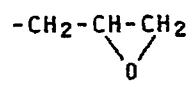

und $X^-$ ein Anion, wie $Cl^-$, $Br^-$, $J^-$, Methosulfat, Ethosulfat, Acetatsulfat, Hydrogensulfat und Dihydrogenphosphat, Hydrogensulfat und Dihydrogenphosphat sein kann. Vorzugsweise verwendet man aus dieser Verbindungsklasse das unsubstituierte N-Vinylimidazol in Salzform. Weitere geeignete wasserlösliche Monomere sind N-Vinylimidazoline, die beispielsweise mit Hilfe folgender allgemeiner Formel charakterisiert werden können:

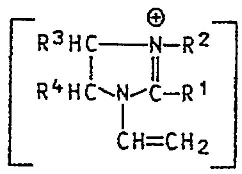 $X^-$ (I),

in der

$R^1$ = H, $C_1$- bis $C_{18}$-Alkyl, 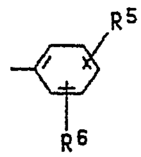

$R^5$, $R^6$ = H, $C_1$- bis $C_4$-Alkyl, Cl,

$R^2$ = H, $C_1$- bis $C_{18}$-Alkyl, 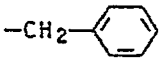, 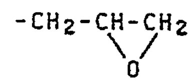

$R^3$, $R^4$ = H, $C_1$- bis $C_4$-Alkyl, und

$X^-$ ein Säurerest bedeutet.

Vorzugsweise setzt man bei der Polymerisation aus dieser Gruppe von Verbindungen 1-Vinyl-2-imidazolin-Salze der Formel II ein

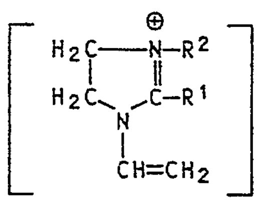 $X^-$ (II),

in der
$R^1$ = H, $CH_3$, $C_2H_5$, n- und i-$C_3H_7$, $C_6H_5$ und
$X^-$ ein Säurerest ist. $X^-$ steht vorzugsweise für $Cl^-$, $Br^-$, $SO_4^{2-}$, $HSO_4^{\ominus}$, $H_2PO_4^{\ominus}$, $CH_3O\text{-}SO_3^-$, $C_2H_5\text{-}0\text{-}SO_3^-$, $R^1\text{-}COO^-$ und $R^2$ = H, $C_1$- bis $C_4$-Alkyl und Aryl.

Der Substituent $X^-$ in den Formeln I und II kann prinzipiell jeder beliebige Säurerest einer anorganischen oder einer organischen Säure sein. Die Monomeren der Formel I werden erhalten, indem man die freie Base, d.h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toloulsulfonsäure neutralisiert werden. Außer Salzen von 1-Vinyl-2-imidazolinen kommen auch quaternisierte 1-Vinyl-2-imidazoline in Betracht. Sie werden hergestellt, indem men 1-Vinyl-2-imidazoline, die gegebenenfalls in 2-, 4- und 5-Stellung substituiert sein können, mit bekannten Quaternisierungsmitteln umsetzt. Als Quaternisierungsmittel kommen beispielsweise $C_1$- bis $C_1$-Alkylchloride oder -bromide, Benzylchlorid, Benzylbromid, Epichlorhydrin, Dimethylsulfat und Diethylsulfat in Betracht. Als Quaternisierungsmittel verwendet man vorzugsweise Epichlorhydrin, Benzylchlorid, Dimethylsulfat und Methylchlorid.

Weitere geeignete wasserlösliche Monomere sind beispielsweise Acrylamidomethylpropansulfonsäure, Vinylsulfonsäure, Vinylphosphonsäure und Vinylmilchsäure.

Vorzugsweise kommen als wasserlösliche ethylenisch ungesättigte Monomere Diallyldimethylammoniumchlorid, Acrylsäure, Methacrylsäure, N-Vinylpyrrolidon, Acrylamid und Methacrylamid in Betracht. Die Monomeren können entweder allein zu Homopolymerisaten oder auch in Mischung miteinander zu Copolymerisaten in Perlform polymerisiert werden. Von besonderem Interesse sind beispielsweise Copolymerisate aus Acrylamid und Acrylsäure, Copolymerisate aus Acrylamid und Methacrylsäure, Copolymerisate aus Methacrylamid und Acrylsäure, Copolymerisate aus Methacrylamid und Methacrylsäure, Copolymerisate aus Acrylamid, Acrylsäure und Acrylamido-2-methylpropansulfonsäure, Copolymerisate aus Acrylamid und Dimethylaminoethylacrylat, Copolymerisate aus Acrylamid und Diethylaminoethylmethacrylat und Copolymerisate aus Methacrylamid und Dimethylaminoethylacrylat. Die Carbonsäuren und anderen ethylenisch ungesättigten Säuren, wie Vinylsulfonsäure und Acrylamidopropansulfonsäure, können entweder in Form der freien Säure, in partiell neutralisierter oder auch in vollständig neutralisierter Form bei der Polymerisation eingesetzt werden. Als Basen zur Neutralisation dieser Monomeren verwendet beispielsweise Natronlauge, Kalilauge, Ammoniak, Amine, wie Triethylamin, Butylamin, Triethylamin, Morpholin und Ethanolamin.

Die basischen Acrylate und Methacrylate werden vorzugsweise als Salz oder in quaternisierter Form bei der Homo- oder Copolymerisation eingesetzt. Die Neutralisation der basischen Acrylate und -methacrylate erfolgt beispielsweise mit Hilfe von Salzäure, Bromwasserstoffsäure, Schwefelsäure, Phosphorsäure und Carbonsäuren, wie Ameisensäure, Essigsäure und Propionsäure. Außerdem werden die basischen Acrylate und -methacrylate in quaternisierter Form eingesetzt. Die Quaternisierungsprodukte werden erhalten, indem man diese Verbindungen mit üblichen Quaternisierungsmitteln, wie Methylchlorid, Ethylchlorid, Benzylchlorid, Laurylchlorid, Dimethylsulfat, Diethylsulfat oder Epichlorhydrin quaternisiert.

Die Polymerisation der wasserlöslichen Monomeren kann auch in Gegenwart von Vernetzern vorgenommen werden. Die Vernetzer enthalten mindestens zwei ethylenisch ungesättigte Doppelbindungen. Geeignete Vernetzer sind beispielsweise N,N'-Methylen-bisacrylamid, Polyethylenglykoldiacrylate und Polyethylenglykoldimethacrylate, die sich jeweils von Polyethylenglykolen eines Molekulargewichts von 126 bis 8.500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Vernetzer werden in einer Menge von 0,001 bis 5, vorzugsweise 0,01 bis 2 Gew.-%, bezogen auf die bei der umgekehrten Suspensionspolymerisation eingesetzte Monomerenmischung, verwendet.

Um die Monomeren zu polymerisieren, löst man sie zunächst in Wasser. Die Konzentration der Monomeren in der wäßrigen Lösung beträgt 15 bis 80, vorzugsweise 35 bis 65 Gew.-%. Die wäßrige Lösung wird dann unter Bildung einer Suspension in einer inerten hydrophoben Flüssigkeit verteilt. Als inerte hydrophobe Flüssigkeiten können praktisch alle mit Wasser nicht mischbaren Flüssigkeiten verwendet werden, die nicht in die Polymerisation eingreifen. Vorzugsweise verwendet man hierfür aliphatische und aromatische Kohlenwasserstoffe oder Mischungen aus aliphatischen und aromatischen Kohlenwasserstoffen. Geeignete aliphatische Kohlenwasserstoffe sind beispielsweise Pentan, Hexan, Heptan, Octan, Nonan, Decan, Cyclohexan, Decalin, Methylcyclohexan, Isooctan und Ethylcyclohexan. Aromatische Kohlenwasserstoffe, die als hydrophobe Flüssigkeit bei der umgekehrten Suspensionspolymerisation verwendet werden, sind beispielsweise Benzol, Toluol, Xylol und Isopropylbenzol. Daneben ist es selbstverständlich auch möglich, halogenierte Kohlenwasserstoffe, wie Tetrachlorethan, Hexachlorethan, Trichlorethan und Chlorbenzol zu verwenden. Vorzugsweise verwendet man Cyclohexan oder Kohlenwasserstoffe eines Siedebereiches von 60 bis 120°C.

Die umgekehrte Suspensionspolymerisation erfolgt in Gegenwart von Polymerisationsinitiatoren. Hierfür verwendet man die üblichen radikalischen Initiatoren, wie Peroxide, Hydroperoxide und Azoverbindungen. Vorzugsweise verwendet man wasserlösliche Polymerisationsinitiatoren, wie Natriumpersulfat, Kaliumpersulfat, Ammoniumpersulfat, 2,2'-Azo-bis-(2-amidinopropan)-dihydrochlorid, 2,2'-Azo-bis-(N,N'-dimethylenisobutyramidin)-dihydrochlorid und 4,4'-Azo-bis-(4-cyanpentansäure).

Die umgekehrte Suspensionspolymerisation wird in der Weise durchgeführt, daß man eine wäßrige Lösung mindestens eines wasserlöslichen Monomeren in einer inerten hydrophoben Flüssigkeit suspendiert, so daß eine Wasser-in-Öl-Suspension entsteht. Um diese Suspension zu stabilisieren, benötigt man ein geeignetes Schutzkolloid. Gemäß Erfindung werden als Schutzkolloid Pfropfpolymerisate eingesetzt, die erhältlich sind durch Pfropfen von Polymerisaten A), die

a) 40 bis 100 Gew.-% monovinylaromatische Monomere,

b) 0 bis 60 Gew.-% monoethylenisch ungesättigten Carbonsäuren mit 3 bis 6 C-Atomen, Maleinsäureanhydrid und/oder Itaconsäureanhydrid und

c) 0 bis 20 Gew.-% andere monoethylenisch ungesättigte Monomere, mit der Maßgabe einpolymerisiert enthalten, daß die Summe der Gewichtsprozente a) bis c) immer 100 beträgt, mit den oben unter (1) bis (5) angegebenen Monomeren. Bei den Polymerisaten A) kann es sich entweder um Homopolymerisate von monovinylaromatischen Monomeren, wie Styrol, handeln oder um Copolymerisate der monovinylaromatischen Monomeren mit einer ethylenisch ungesättigten Carbonsäure oder einem Anhydrid einer monoethylenisch ungesättigten Carbonsäure.

Als Komponente a) der Polymerisate A) kommen monovinylaromatische Monomere in Betracht, z.B. Styrol, α-Methylstyrol, α-Alkylstyrole mit 2 bis 6 C-Atomen im Alkylrest, der geradkettig und/oder verzweigt sein kann, z.B. α-Iso-Butylstyrol. Daneben eignen sich Vinylaromaten, die außer der Vinylgruppierung am aromatischen Kern eine $C_1$- bis $C_8$-Alkylgruppe tragen, z.B. Vinyltoluol, tert.-Butylstyrol, Halogenstyrole, Kern(alkyl)substituierte α-Alkylstyrole mit 1 bis 8 C-Atomen im Kernalkylrest und mit 1 bis 6 C-Atomen im α-Alkylrest, z.B. para-tert.-Butyl-α-Methylstyrol. Vorzugsweise verwendet man

aus dieser Monomerengruppe Styrol. Es ist zu 40 bis 100 Gew.-%, vorzugsweise 60 bis 95 Gew.-% am Aufbau des Polymerisates A) beteiligt.

Zu den Monomeren der Gruppe b) gehören monoethylenisch ungesättigte Carbonsäuren mit 3 bis 6 C-Atomen und/oder deren Anhydride, z.B. Acrylsäure, Methacrylsäure, Ethacrylsäure, Maleinsäure, Fumarsäure, Itaconsäure, Maleinsäureanhydrid, Itaconsäureanhydrid, Vinylmilchsäure, Vinylphosphonsäure und Vinylsulfonsäure. Diese Monomeren werden entweder allein oder in Mischung eingesetzt. Vorzugsweise verwendet man aus dieser Gruppe von Monomeren Acrylsäure, Methacrylsäure, Maleinsäureanhydrid und Itaconsäureanhydrid. Die Monomeren dieser Grupe sind zu 0 bis 60, vorzugsweise 5 bis 40 Gew.-% am Aufbau der Polymerisate A) beteiligt.

Außer den Monomeren der Gruppen a) und b) können noch gegebenenfalls bis zu 20 Gew.-% andere monoethylenisch ungesättigte Monomere in den Polymerisaten A) in polymerisierter Form enthalten sein. Zu dieser Gruppe von Monomeren gehören beispielsweise die Ester der Acrylsäure, Methacrylsäure und/oder Ethacrylsäure, die sich von Alkoholen mit 1 bis 12 C-Atomen ableiten, z.B. Methylacrylat, Methylmethacrylat, tert.-Butylcyclohexylacrylat, tert.-Butylcyclohexylmethacrylat, Cyclohexylacrylat, Cyclohexylmethacrylat, tert.-Butylacrylat, tert.-Butylmethacrylat, n-Butylacrylat, n-Butylmethacrylat, Isobutylacrylat, Isobutylmethacrylat, 2-Ethylhexylacrylat, 2-Ethylhexylmethacrylat sowie Vinylester von gesättigten aliphatischen Carbonsäuren, die 2 bis 10 C-Atome enthalten, z.B. Vinylacetat, Vinylpropionat, Vinyllaurat, Vinylbutyrat und Vinylstearat. Eine andere Gruppe von Monomeren sind die Amide von Methacrylsäure, Acrylsäure und Ethacrylsäure. Hierbei kann es sich beispielsweise um Methacrylamid oder Acrylamid sowie um N-substituierte Amide, wie Methacrylsäure-N-tert.butylamid oder Acrylsäure-N-tert.-butylamid handeln. Eine weitere Klasse von Monomeren, die gegebenenfalls am Aufbau des Polymerisats A) beteiligt sind, sind Acrylnitril und Methacrylnitril. Die Monomeren der Gruppe der c) können entweder allein oder in Mischung in Mengen bis zu 20 Gew.-% im Copolymerisat A) einpolymerisiert sien. Die Summe der Angaben in Prozent a), b) und c) beträgt jeweils 100.

Die Polymerisate A) haben ein Molekulargewicht (Zahlenmittel) von 500 bis 20 000 und Hydrierjodzahlen (nach DIN 53 241) von 1,3 bis 51, vorzugsweise 2,5 bis 25,4. Es ist besonders bevorzugt, Polymerisate A) zu verwenden, deren Hydrierjodzahlen 5,1 bis 16,9 betragen. Das mittlere Molekulargewicht (Zahlenmittel) der Polymerisate A) beträgt vorzugsweise 1000 bis 10 000. Vorzugsweise werden solche Polymerisate A) eingesetzt, die in aliphatischen Kohlenwasserstoffen eines Siedebereichs von 50 bis 150°C schwer löslich sind.

Solche Polymerisate sind bekannt. Sie werden beispielsweise durch Homo- oder Copolymerisation der Monomeren a) bis c) in Substanz bei 180 bis 400, vorzugsweise 200 bis 300°C hergestellt. Besonders bevorzugt ist die kontinuierliche Substanzpolymerisation der Monomeren, die in dem angegebenen Temperaturbereich und insbesondere bei 200 bis 260°C und Drücken von 1 bis 100, vorzugsweise 20 bis 50 bar in Abwesenheit von Polymerisationsinitiatoren oder auch in Gegenwart von Polymerisationsinitiatoren und Polymerisationsinhibitoren durchgeführt wird. Solche Polymerisationsverfahren sind beispielsweise aus folgenden Literaturstellen bekannt:
DE-A 3 026 831, DE-A 3 046 476, US-A 4 042 768 und US-A 4 414 370.

Die Polymerisate A) dienen als Pfropfgrundlage für die Herstellung der erfindungsgemäß einzusetzenden Schutzkolloide. Zur Herstellung der Pfropfpolymerisate verfährt man im allgemeinen so, daß man zu einer Lösung oder Dispersion der Polymeren A) in einem aliphatischen und/oder aromatischen Kohlenwasserstoff - vorzugsweise verwendet man diejenigen Lösemittel, die anschließend bei der umgekehrten Suspensionspolymerisation als hydrophobe inerte Flüssigkeit verwendet werden - einen Teil des Polymerisationsinitiators und einen Teil der Monomerenmischung der Monomeren (1) bis (5) auf eine höhere Temperatur erhitzt und nach dem Beginn der Polymerisation die restlichen Monomeren und den Polymerisationsinitiator zugibt.

Als Monomere der Gruppe (1) verwendet man Acrylsäureester und/oder Methacrylsäureester von einwertigen 1 bis 20 C-Atome enthaltenden Alkoholen. Beispiele für diese Gruppe von Monomeren sind Methylacrylat, Methylmethacrylat, Ethylacrylat, Ethylmethacrylat, Propylacrylat, Isopropylacrylat, Propylmethacrylat, n-Butylacrylat, sec.-Butylacrylat, tert.-Butylacrylat, tert.-Butylmethacrylat, sek.-Butylmethacrylat, n-Butylmethacrylat, tert.-Butylcyclohexylacrylat, tert.-Butylcyclohexylmethacrylat, Cyclohexylacrylat, 2-Ethylhexylacrylat, 2-Ethylhexylmethacrylat und Laurylacrylat. Außerdem können die Ester der Ethacrylsäure verwendet werden, die sich von einwertigen Alkoholen mit 1 bis 12 C-Atomen ableiten. Vorzugsweise verwendet man aus dieser Gruppe von Monomeren Acrylsäureester und/oder Methacrylsäureester von einwertigen, 3 bis 6 C-Atome enthaltenden Alkoholen. Ganz besonders bevorzugt ist der Einsatz von tert.-Butylacrylat, n-Butylacrylat und Isobutylacrylat oder deren Gemische in einer Menge von 85 bis 98 Gew.-%, bezogen auf die Monomerenmischung, die auf das Polymerisat (A) aufgepfropft wird. Die Monomeren der Gruppe (1) werden im allgemeinen in einer Menge von 70 bis 100 Gew.-%, bezogen auf die aufzupfropfenden Monomeren, eingesetzt. Bei einer nur geringfügigen Modifizierung beträgt die Menge an Monomeren der Gruppe (1) 92,5 bis 100 Gew.-%.

Als Monomere der Gruppe (2) kommen monethylenisch ungesättigte Carbonsäuren mit 3 bis 6 C-Atomen und/oder deren Anhydride in Betracht. Diese Gruppe von Monomeren entspricht den Monomeren der Gruppe b) der Polymerisate A). Es handelt sich im einzelnen hierbei beispielsweise um Acrylsäure, Methacrylsäure, Ethacrylsäure, Fumarsäure, die Anhydride der genannten Carbonsäuren und Maleinsäureanhydrid. Diese Gruppe von Monomeren wird gegebenenfalls bei der Herstellung der Pfropfpolymerisate mitverwendet und ist zu 0 bis 15 Gew.-% in der Monomerenmischung, die auf das Polymerisat A) aufgepfropft wird, vorhanden. Vorzugsweise verwendet man aus dieser Gruppe von Monomeren Acrylsäure, Methacrylsäure, Maleinsäureanhydrid oder Itaconsäureanhydrid in einer Menge von 0 bis 7,5 Gew.-%, bezogen auf die Monomeren.

Als Monomere der Gruppe (3) von Monomeren, die auf das Polymerisat A) aufgepfropft werden können, sind Acrylsäuremonoester und/oder Methacrylsäuremonoester von mindestens 2-wertigen Alkoholen zu nennen. Hierzu gehören beispielsweise Hydroxyethylacrylat, Hydroxyethylmethacrylat, Hydroxypropylacrylat, Hydroxypropylmethacrylat, Hydroxybutylacrylat und Hydroxybutylmethacrylat. Diese Gruppe von Monomeren wird gegebenenfalls bis zu 10 Gew.-% in der Monomermischung mitverwendet.

Eine weitere Modifizierung der Polymerisate A) kann durch Aufpfropfen von Monomeren der Gruppe (4) erfolgen. Zu diesen Monomeren gehören monovinylaromatische Verbindungen, die in einer Menge bis zu 15 Gew.-%, vorzugsweise 1 bis 7,5 Gew.-% in der Monomermischung enthalten sein können. Diese Monomeren sind identisch mit den Monomeren der Gruppe a) der Polymerisate A). Vorzugsweise wird aus dieser Gruppe von Monomeren Styrol verwendet.

Eine weitere Modifizierung kann dadurch erfolgen, daß die Mischung der Monomeren, die auf die Polymerisate A) aufgepfropft werden, als Monomere der Gruppe (5) gegebenenfalls bis zu 7,5 Gew.-% Acrylamid und/oder Methacrylamid enthalten. Die Summe der Gewichtsprozente der Monomeren der Gruppen (1) bis (5) beträgt immer 100. Die Monomeren (1) bis (5) werden in einer Menge von 97,5 bis 50 Gew.-%, vorzugsweise 90 bis 75, bezogen auf die Mischung aus Polymerisat A) und den Monomeren (1) bis (5), zur Herstellung der Pfropfpolymerisate eingesetzt.

Die Pfropfpolymerisation erfolgt im allgemeinen bei Temperaturen von 50 bis 150, vorzugsweise 60 bis 120°C in Gegenwart von Polymerisationsinitiatoren, die im allgemeinen in einer Menge von 0,01 bis 6, vorzugsweise 0,1 bis 4 Gew.,-%, bezogen auf das Gewicht der Polymeren A) und der Monomermischung, eingesetzt werden. Die Pfropfpolymerisation kann bei Normaldruck, sowie bei erhöhtem oder vermindertem Druck durchgeführt werden.

Geeignete Polymerisationsinitiatoren sind zum Beispiel Azo-bis-isobutyronitril, Acylperoxide, wie Benzoylperoxid, Dilaurylperoxid, Didecanoylperoxid, Isononanoylperoxid, .Alkylperester, wie tert.-Butylperpivalat, tert.-Butyl-per-2-ethylhexanoat, tert.-Butylpermaleinat, tert.-Butylperisononanoat, tert.-Butylperbenzoat, Dialkylperoxide, wie Dicumylperoxid, tert.-Butylcumyl-peroxid, Di-tert.-Butylperoxid und Peroxidcarbonate, wie Dimyristyl-peroxidicarbonat, Dicetyl-peroxidicarbonat, Bis(4-tert.-Butylcyclohexyl)peroxidicarbonat, Dicyclohexylperoxidicarbonat, Di-2-ethylhexyl-peroxidicarbonat, Hydroperoxide, wie Cumolhydroperoxid und tert.-Butylhydroperoxid und Polymerisationsinitiatoren, wie 3,4-Dimethyl-3,4-diphenylhexan und 2,3-Dimethyl-2,3-diphenylbutan. Vorzugsweise verwendet man Alkylperester, insbesondere tert.-Butylperpivalat, tert.-Butyl-per-2-ethylhexanoat und tert.-Butylperisononanoat, in Mengen von 2 bis 4 Gew.-%, bezogen auf das Gewicht der Polymeren A) und der Monomermischung.

Der Polymerisationsinitiator kann auch in Form einer Lösung, z.B. in flüssigen aliphatischen und aromatischen Kohlenwasserstoffen mit den Monomeren oder in den Monomeren selbst gelöst dem Reaktionsgemisch zugegeben werden. In manchen Fällen ist es von Vorteil, bei der Pfropfpolymerisation das Polymere A) nur teilweise, z.B. in Mengen von 10 bis 60 Gew.-% in Form einer Lösung oder Dispersion in einem aliphatischen oder aromatischen Kohlenwasserstoff vorzulegen und den Rest des Polymeren A) in dem jeweils zur Anwendung gelangenden Monomergemisch zu lösen und den Reaktionsgemisch vorzugsweise nach Fortschritt der Pfropfpolymerisation zuzugeben. Das Polymere A), das als Pfropfgrundlage dient, wird vorzugsweise in Mengen von 5 bis 30 Gew.-%, bezogen auf das Gewicht des Polymerisates A) und der jeweils anzuwendenden Monomermischung, eingesetzt.

Wie oben bereits ausgeführt, werden in der bevorzugten Ausführungsform die Schutzkolloide in dem aliphatischen und/oder aromatischen Kohlenwasserstoff hergestellt, der auch bei der nachfolgenden umgekehrten Suspensionspolymerisation als inertes hydrophobes Lösemittel verwendet wird. Dadurch wird im Produktionsbetrieb die Herstellung verschiedener Lösemittelmischungen vermieden. Es eignen sich aber dennoch auch andere Lösemittel für die Herstellung der Pfropfpolymerisate A), z.B. Ketone, wie Aceton, Methylethylketon, Ester, wie Essigsäureethylester, Alkohole wie Methanol, Ethanol, Isopropanol gegebenenfalls auch im Gemisch mit aromatischen Kohlenwasserstoffen, z.B. Toluol, Benzol, o-, m-, p-Xylol und/oder im Gemisch mit aliphatischen Kohlenwasserstoffen, z.B. Hexan, Heptan, Octan oder Cyclohexan. Die Monomermischungen können entweder in reiner Form oder gelöst in einem Lösemittel oder Lösemittelgemisch der Pfropfpolymerisation zugeführt werden. Während der Pfropfpolymerisation kann das Lösemittel auch getrennt von den Monomeren dem Reaktionsgemisch zugegeben werden. Es ist auch möglich, einen Teil des Lösemittels während der Pfropfpolymerisation und den Rest nach der Reaktion dem Ansatz zuzugeben. Im Anschluß an die Pfropfpolymerisation können die dabei erhaltenen Pfropfpolymerisate, d.h. die bei der umgekehrten Suspensionspolymerisation anzuwendenden Schutzkolloide, gegebenenfalls in reiner Form isoliert werden oder so wie sie bei der Polymerisation anfallen, bei der umgekehrten Suspensionspolymerisation eingesetzt werden. Vorzugsweise verwendet man die bei der Pfropfpolymerisation erhältlichen Dispersionen direkt ohne das Pfropfpolymerisat zu isolieren. Der K-Wert der erfindungsgemäß als Schutzkolloide anzuwendenden Pfropfcopolymerisate beträgt 25 bis 100, vorzugsweise 34 bis 65. Die Schutzkolloide werden bei der umgekehrten Suspensionspolymerisation in einer Menge von 0,01 bis 3, vorzugsweise 0,2 bis 1,1 Gew.-%, bezogen auf die eingesetzten Monomeren, angewendet.

Der Anteil der inerten hydrophoben Flüssigkeit am Aufbau der Wasser-in-Öl-Suspension beträgt 22 bis 91 Gew.-%, vorzugsweise 35 bis 73 Gew.-%. Bei der umgekehrten Suspensionspolymerisation erhält man perlförmige Polymerisate, die durch azeotropes Entfernen des Wassers und Abtrennen der Ölphase als trockene Produkte anfallen. Der Durchmesser der Polymerisatperlen beträgt 0,01 bis 1,6 mm und liegt vorzugsweise im Bereich von 0,05 bis 0,8 mm. Der Vorteil der erfindungsgemäß einzusetzenden Schutzkolloide liegt darin, daß man Produkte mit engerer Korngrößenverteilung herstellen kann und Polymerisate mit einem deutlich geringeren Anteil an Staub erhält. Außerdem ist es möglich, mit einem einzigen Schutzkolloid eine große Zahl von Polymerisaten einer einheitlichen Teilchengröße herzustellen, ohne für jede Änderung der Monomerzusammensetzung ein neues, dafür besonders geeignetes Schutzkolloid zu entwickeln, so daß die hier beschriebenen Schutzkolloide universeller verwendbar sind als die bisher für umgekehrte Suspensionspolymerisationen eingesetzten. Durch den Einsatz der beschriebenen Schutzkolloide wird die Bildung von Polymerisatbelägen an Kesselwänden und Rührerwellen praktisch vermieden.

Die bei der umgekehrten Suspensionspolymerisation anfallenden hochmolekularen Homo- bzw. Copolymerisate (K-Werte von 170 bis 300) werden beispielsweise als Flockungsmittel für Abwässer von Kläranlagen, als Schlammentwässerungsmittel, bei der Aufbereitung von Rohkohle und bei der Papierherstellung verwendet. Vernetzte Copolymerisate auf Basis von Acrylsäure, Methacrylsäure und deren Amiden werden als Verdickungsmittel (z.B. im Textilpigmentdruck) oder als wasserabsorbierende Stoffe in Hygieneartikeln verwendet. Nach dem Verfahren der umgekehrten Suspensionspolymerisation erhältliche Homo- und Copolymerisate mit K-Werten von 60 bis 150 werden beispielsweise zur Trockenverfestigung von Papier angewendet. Niedrigmolekulare Polymerisate, deren K-Werte bis etwa 60, vorzugsweise 10 bis 40 betragen, sind Dispergiermittel, die z.B. zum Dispergieren von Pigmenten für Papierstreichmassen eingesetzt werden können.

Die Prozentangaben in den Beispielen sind Gewichtsprozente. Die Molekulargewichte der Pfropfpolymerisate wurden dampfdruckosmometrisch in Aceton bestimmt und haben die Dimension g/Mol. Die für die Polymeren A) angegebenen Molekulargewichte beziehen sich jeweils auf das Zahlenmittel. Die Erweichungspunkte der Polymerisate A) wurden auf der Kofler-Bank ermittelt. Die Hydrierjodzahlen sind nach DIN 53 241 bestimmt worden und bedeuten g-Jod/100 g Polymerisat. Die K-Werte der als Schutzkolloide verwendeten Pfropfcopolymerisate und die K-Werte der Polymerisate, die nach dem Verfahren der umgekehrten Suspensionspolymerisation hergestellt wurden, sind nach H. Fikentscher, Cellulose Chemie, Band 13, 48 bis 64 und 71 bis 74 (1932) bestimmt worden. Die K-Werte der Schutzkolloide wurden in 1 %iger Lösung in Tetrahydrofuran bei 25°C gemessen, während die K-Werte der durch umgekehrte Suspensionspolymerisation erhaltenen Polymerisate in 5 %iger Natriumchloridlösung bei einer Polymerisatkonzentration von 0,1 % und einer Temperatur von 25°C bestimmt wurden.

Als Pfropfgrundlage wurden folgende Polymerisate A) hergestellt.

Polymer A 1

Eine Monomermischung aus 83 % Styrol und 17 % Methacrylsäure wird durch kontinuierliche Substanzpolymerisation bei 225 bis 235 °C unter einem Druck von 27 bar polymerisiert. Man erhält dabei ein Copolymerisat eines Molekulargewichts von 3420, einer Säurezahl von 110 mg KOH/g einer Hydrierjodzahl von 9 und eines Erweichungspunkts von 144°C.

Polymer A 2

Eine Monomermischung aus 76 % Styrol und 24 % Methacrylsäure wird kontinuierlich bei 238 bis 240 °C in Substanz unter einem Druck von 26 bis 28 bar polymerisiert. Man erhält dabei ein Copolymerisat mit folgenden Kenndaten: Molekulargewicht: 4630, Säurezahl: 147 mg KOH/g, Hydrierjodzahl 10 und Erweichungspunkt 150 °C.

Polymer A 3

Man polymerisiert eine Monomermischung aus 83 % Styrol und 17 % Methacrylsäure kontinuierlich bei einer Temperatur von 249 bis 251°C und bei einem Druck von 24 bar. Man erhält ein Copolymerisat, das ein Molekulargewicht von 1870, eine Säurezahl von 104 mg KOH/g, eine Hydrierjodzahl von 14 g/100 g Polymer und einen Erweichungspunkt von 138 °C hat.

Polymer A 4

Man polymerisiert eine Monomermischung aus 92 % Styrol und 8 % Acrylsäure kontinuierlich bei einer Temperatur von 252 bis 255°C unter einem Druck von 24 bar. Man erhält dabei ein Copolymerisat, das ein Molekulargewicht von 1190, eine Säurezahl von 63 mg KOH/g Polymerisat und eine Hydrierjodzahl von 20 g Jod/100 g Polymerisat aufweist.

Herstellung der als Schutzkolloide einzusetzenden Pfropfpolymerisate

Die Pfropfpolymerisation wurde in einer üblichen Polymerisationsapparatur durchgeführt, die aus einem Reaktionsgefäß bestand, das mit einem Rückflußkühler, Thermometer, einer Heizung und einer Kühlvorrichtung, einem Rührer, Zulaufgefäßen und für das Arbeiten unter Inertgasatmosphäre ausgerüstet war.

Schutzkolloid A

In der oben beschriebenen Polymerisationsapparatur wird eine Mischung aus 600 g des Polymeren A 1, 500 g Cyclohexan, 720 g tert.-Butylacrylat, 4,7 g tert.-Butyl-per-2-ethylhexanoat vorgelegt und zum Sieden unter Rückfluß erhitzt. Nach Beginn des Rückflußsiedens gibt man innerhalb eines Zeitraums von 3 Stunden eine Lösung von 1440 g tert.-Butylacrylat, 240 g Methacrylsäure und 1250 g Cyclohexan und separat davon gleichzeitig eine Lösung von 90 g tert.-Butyl-per-2-ethylhexanoat in 500 g Cyclohexan in 3,5 Stunden zu. Nach Abschluß der Monomeren- und Initiatorzugabe wird das Reaktionsgemisch noch 2 Stunden zum Sieden unter Rückfluß erwärmt und anschließend mit Cyclohexan verdünnt. Man erhält eine Schutzkolloiddispersion mit einem Polymergehalt von 30 %. Das Pfropfcopolymerisat hat einen K-Wert von 36.

Schutzkolloid B

In der oben beschriebenen Polymerisationsapparatur wird eine Mischung aus 1700 g des Polymeren A 3, 532 g Maleinsäureanhydrid, 1600 g Cyclohexan, 2470 g tert.-Butylacrylat und 65 g tert.-Butylperpivalet vorgelegt und zum Sieden unter Rückfluß erhitzt. Innerhalb von 2 Stunden nach Beginn des Rückflußsiedens gibt man jeweils eine Lösung von 4730 g tert.-Butylacrylat und 568 g Styrol in 1766 g Cyclohexan und gleichzeitig damit eine Lösung von 260 g tert.-Butylperpivalat in 833 g Cyclohexan zu. Nach der Dosierung der Monomeren und des Polymerisationsinitiators wird das Reaktionsgemisch noch 2 Stunden beim Rückflußsieden gerührt und danach mit Cyclohexan verdünnt. Man erhält eine Schutzkolloiddispersion mit einem Polymergehalt von 40 %. Das Pfropfcopolymerisat hat einen K-Wert von 32.

Schutzkolloid C

In der oben beschriebenen Polymerisationsapparatur wird eine Mischung aus 560 g des Polymeren A 1, 546 g n-Butylacrylat, 3,2 g tert.-Butylperpivalat und 353 g Cyclohexan vorgelegt und zum Sieden unter Rückfluß erhitzt. Sofort nach Beginn des Rückflußsiedens wird innerhalb eines Zeitraums von 3 Stunden eine Lösung von 894 g n-Butylacrylat in 530 g Cyclohexan und gleichzeitig damit eine Lösung von 61,5 g tert.-Butylperpivalet in 176 g Cyclohexan zugegeben. Nach Zugabe des Initiators und der Monomeren wird das Reaktionsgemisch noch 2 Stunden bei der Siedetemperatur gerührt und anschließend mit Cyclohexan verdünnt. Man erhält eine leicht trübe Schutzkolloidlösung mit einem Polymergehalt von 20 %. Das Pfropfcopolymerisat hat einen K-Wert von 35.

Schutzkolloid D

Man verfährt wie bei der Herstellung des Schutzkolloids C beschrieben, verwendet jedoch anstelle von n-Butylacrylat tert.-Butylacrylat. Man erhält eine Schutzkolloiddispersion mit einem Polymergehalt von 20 %. Der K-Wert des Pfropfcopolymerisats beträgt 37.

Schutzkolloid E

In der oben beschriebenen Polymerisationspparatur wird eine Mischung aus 850 g des Polymeren A 1, 266 g Maleinsäureanhydrid, 1200 g tert.-Butylacrylat und 7,9 g tert.-Butylperpivalet in 800 g Cyclohexan vorgelegt und zum Sieden unter Rückfluß erhitzt. Innerhalb von 3 Stunden gibt man gleichzeitig eine Lösung von 2400 g tert.-Butylacrylat und 284 g Styrol in 850 g Cyclohexan und eine Lösung von 150,1 g tert.-Butylperpivalat in 430 g Cyclohexan zum Reaktionsgemisch. Das Reaktionsgemisch wird noch 2 Stunden nach Beendigung der Monomer- und Initiatorzugabe bei der Siedetemperatur gerührt und danach mit 9590 g Cyclohexan verdünnt. Die Schutzkolloiddispersion hat einen Feststoffgehalt von 30 %. Der K-Wert des Pfropfpolymerisats beträgt 42.

Schutzkolloid F

In der oben beschriebenen Apparatur wird eine Lösung von 175 g des Polymeren A 4, 98,1 g Maleinsäureanhydrid, 52 g Styrol, 925 g 2-Ethylhexylacrylat und 3 g tert.-Butyl-2-ethylhexanoat in 400 g Toluol vorgelegt zum Sieden erhitzt und 30 Minuten beim Rückflußsieden gerührt. Dann gibt man gleichzeitig eine Lösung von 160 g tert.-Butyl-per-2-ethylhexanoat in einer Mischung aus 200 g Toluol und 100 g Aceton und eine Lösung von 1845 g 2-Ethylhexylacrylat, 175 g des Polymeren A 4, 98,1 g Maleinsäureanhydrid und 52 g Styrol in 200 g Aceton innerhalb einer Stunde zu und polymerisiert das Reaktionsgemisch noch 2 Stunden nach Beendigung der Monomerzugabe nach. Durch Zugabe einer Mischung aus Toluol und Aceton im Gewichtsverhältnis 2:1 zum Reaktionsgemisch wird der Feststoffgehalt der Dispersion auf 66,8 % eingestellt. Das Pfropfcopolymerisat hat einen K-Wert von 46,2.

Schutzkolloid G

Man verfährt wie bei der Herstellung des Schutzkolloids F, ersetzt jedoch das 2-Ethylhexylacrylat durch die selbe Menge an n-Butylacrylat und stellt durch Zugabe einer Mischung aus Toluol und Aceton im Gewichtsverhältnis 2:1 einen Pfropfcopolymerisatgehalt von 75,2 % ein. Das Pfropfpolymerisat hat einen K-Wert von 42,9.

Schutzkolloid H

Man verfährt wie bei der Herstellung des Schutzkolloids F angegeben, ersetzt jedoch das dort verwendete 2-Ethylhexylacrylat durch Isobutylacrylat und verwendet anstelle von Toluol und der Mischung aus Toluol und Aceton ausschließlich Cyclohexan. Nach Beendigung der Pfropfpolymerisation wird das Reaktionsgemisch durch Zugabe von Cyclohexan auf einen Feststoffgehalt von 40,5 Gew.-% verdünnt. Das Pfropfcopolymerisat hat einen K-Wert von 40,1.

Schutzkolloid I (gemäß US-A 4 164 613)

Gemäß Beispiel 1 der obengenannten Patentschrift wird das Schutzkolloid A aus Dicyclopentadien, Maleinsäureanhydrid und Styrol hergestellt.

Umgekehrte Suspensionspolymerisation

Die in den Beispielen verwendeten Schutzkolloide A bis I werden in Form der Dispersionen bzw. der Lösungen eingesetzt. Die dafür angegebenen Mengen beziehen sich immer auf den Feststoffgehalt der Dispersionen bzw. der Lösungen.

Beispiel 1

Als Polymerisationsapparatur wird ein 2-l-Kolben verwendet, der mit einem Impellerrührer, Rückflußkühler, Wasserabscheider, Thermometer und Einleitungsrohr für Stickstoff versehen ist. Man legt darin 800 g Cyclohexan vor, gibt 1,9 g des Schutzkolloids B zu und erwärmt die Mischung auf 55°C. Dann fügt man eine Lösung von 400 g einer 60%igen wäßrigen Lösung von Diallyldimethylammoniumchlorid, in der außerdem 3 g 2,2'-Azobis(2-amidinopropan)-dihydrochlorid gelöst sind, innerhalb von 1 Stunde zu. Während der Zugabe der wäßrigen Lösung zu der Vorlage wird die Mischung unter Bildung einer Suspension gerührt. Das Reaktionsgemisch wird dann auf 55°C erwärmt und 16 Stunden bei dieser Temperatur gerührt. Anschließend entfernt man das Wasser azeotrop, kühlt den Kolbeninhalt auf Raumtemperatur ab und filtriert das perlförmige Polymerisat ab. Es wird danach unter vermindertem Druck getrocknet. Man erhält auf diese Weise ein staubfreies, sehr gut rieselfähiges Perlpolymerisat vom K-Wert 99. Die Polymerisationsapparatur war frei von Wand- und Rührerbelägen. Die Teilchengrößenverteilung ist in Tabelle 1 angegeben. Das wasserlösliche Polymerisat kann u.a. als Flockungsmittel bei der Papierherstellung verwendet werden.

Beispiel 2

In der in Beispiel 1 beschriebenen Polymerisationsapparatur werden 800 g Cyclohexan und 2 g des Schutzkolloids E vorgelegt und unter Rühren mit 400 g einer 62%igen wäßrigen Diallyldimethylammoniumchloridlösung, in der 5 g Kaliumperoxodisulfat und 1 g Triallylmethylammoniumchlorid gelöst sind, in eine Wasser-in-Öl-Suspension überführt. Die Suspension wird 12 Stunden bei 70°C polymerisiert. Dann entfernt man das Wasser durch azeotrope Destillation, filtriert das perlförmige vernetzte Produkt ab und trocknet es unter vermindertem Druck. Man erhält ein rieselfähiges, in Wasser quellbares Polymerisat mit einer Teilchengröße von 0,07 bis 0,75 mm. Die Polymerisationsapparatur und der Rührer sind frei von Wandbelägen. Das unlösliche, in Wasser quellbare Polymerisat kann zur Herstellung von flüssigkeitsabsorbierenden Produkten verwendet werden.

Beispiel 3

In der in Beispiel 1 angegebenen Polymerisationsapparatur wird in der dort beschriebenen Weise eine Suspension hergestellt, in dem man zu 800 g Cyclohexan und 2 g des Schutzkolloids A 400 g einer 60%igen wäßrigen Diallylpyrrolidiniumbromidlösung und 100 g einer 50 %igen wäßrigen Acrylamidlösung, die 3 g 2,2'-Azobis-(2-amidinopropan)dihydrochlorid gelöst enthält, zugibt. Das Reaktionsgemisch wird

10 Stunden bei 60°C polymerisiert. Danach entfernt man das Wasser azeotrop, filtriert und trocknet das Produkt unter vermindertem Druck. Das so erhaltene rieselfähige perlförmige Polymerisat hat eine Teilchengröße von 0,1 bis 0,5 mm. Es ist praktisch staubfrei. In der Polymerisationsapparatur sind keine Beläge feststellbar. Das Copolymere hat einen K-Wert von 85 und eignet sich u.a. als Dispergierhilfsmittel.

Beispiel 4

Ein 4-liter fassender Kessel, der mit einem Impellerrührer, Rückflußkühler, Zulaufgefäß und Einrichtung für das Arbeiten unter Stickstoff ausgestattet ist, wird mit 1,6 l Cyclohexan und 2,8 g Schutzkolloid B beschickt. Der Kesselinhalt wird dann auf 50°C erwärmt und der Druck soweit erniedrigt, daß die Mischung unter Rückfluß siedet. Dann wird eine Monomerlösung hergestellt, indem man 223 g Acrylsäure und 203 g 50%ige Natronlauge in 250 g entmineralisiertem Wasser löst, zu dieser Lösung dann 280 mg N,N'-Methlylenbisacrylamid sowie 0,6 ml einer 1%igen wäßrigen Lösung von Nitrilotrinatriumacetat und 1,12 g Kaliumperoxodisulfat zufügt. Die Mischung wird dann durch Einleiten von Stickstoff vom gelösten Sauerstoff befreit und anschließend innerhalb einer Stunde zur Vorlage getropft. Nach einer Nachpolymerisationszeit von 1 Stunde bei 50°C wird das in den Polymerteilchen befindliche Wasser durch azeotropes Auskreisen entfernt. Die gebildeten Polymerperlen werden vom Cyclohexan abfiltriert und bei 60°C über Nacht im Vakuumtrockenschrank getrocknet. Die Polymerperlen haben einen mittleren Durchmesser von 0,25 mm. In der Polymerisationsapparatur ist weder Wand- noch Rührerbelag feststellbar. Das unlösliche, stark wasserabsorbierende Polymerisat eignet sich u.a. zur Herstellung von flüssigkeitsabsorbierenden Hygieneartikeln.

Beispiel 5

Ein 1-Liter Rundkolben, der mit Rührer und Rückflußkühler versehen ist, wird mit 400 ml Cyclohexan und 0,81 g des Schutzkolloids E beschickt. Anschließend emulgiert man eine Monomerlösung aus 115 ge entmineralisiertem Wasser, 50 g N-Vinylpyrrolidon, 0,5 g Ammoniumformiat und 0,54 g 2,2'-Azobis-(2-amidinopropan)dihydrochlorid ein. Die Suspension wird dann auf 45°C erwärmt und durch Erniedrigen des Drucks zum Rückflußsieden gebracht. Nach einer Polymerisationszeit von 10 Stunden bei 45°C erfolgt der Druckausgleich. Man destilliert dann unter Stickstoffatmosphäre das in den Polymerisatperlen enthaltene Wasser azeotrop ab. Man erhält Polymerperlen mit einem mittleren Durchmesser von 0,15 mm. Das wasserlösliche Polymere hat einen K-Wert von 130. Das wasserlösliche Produkt eignet sich u.a. als Filmbildner in Produkten für die Haarkosmetik und als Tablettenüberzugsmittel.

Allgemeine Polymerisationsvorschrift für die Beispiele 6 bis 24 und die Vergleichsbeispiele 1 und 2

Als Polymerisationsapparatur dient entweder ein Stahlgefäß von 5 Liter Inhalt oder ein 2 Liter fassender 4-Halskolben aus Glas. Beide Reaktoren sind mit einem Rückflußkühler, Rührer, Stickstoffeinlaß und Stickstoffauslaßvorrichtungen, Zulaufgefäßen und einem Anschluß an eine Vakuumpumpe ausgestattet. Im Stahlgefäß werden 1,6 l Cyclohexan, im Glaskolben 800 ml Cyclohexan sowie die in den Beispielen jeweils genannten Mengen an Schutzkolloid und gegebenenfalls Wasser vorgelegt. Durch die vorgelegten Stoffe leitet man Stickstoff, erhitzt die Mischung und erniedrigt den Druck soweit, daß das Lösungsmittel bei der jeweils gewünschten Polymerisationstemperatur unter Rückfluß siedet. Das Reaktionsgemisch wird bis zum Ende der Nachpolymerisation gerührt.
Um die Monomeren zu polymerisieren, mischt man die in den Beispielen genannten Monomeransätze mit dem dort ebenfalls aufgeführten Regler- und Initiatormengen und läßt diese Mischung innerhalb einer Stunde kontinuierlich in die Vorlage tropfen. Nach Beendigung der Monomer- und Starterzugabe erfolgt eine 1-stündige Nachpolymerisation bei einer der Polymerisationstemperatur entsprechenden Temperatur. In einigen Fällen stetzt man anschließend noch eine wäßrige Hydroxylammoniumsulfatlösung bzw. eine Lösung aus Hydroxylammoniumsulfat und Natriumcarbonat zu. Danach wird das in den Polymerteilchen enthaltene Wasser azeotrop abdestilliert, die so erhaltene Polymerperlen vom Cyclohexan abgetrennt und bei 50°C im Vakuum getrocknet.

Beispiel 6

Die umgekehrte Suspensionspolymerisation wird in dem Stahlgefäß durchgeführt, in dem 1,6 l Cyclohexan, 1,47 g des Schutzkolloids B und 13 ml Wasser vorgelegt werden. Der Monomerzulauf besteht aus einer Lösung von 227 g Acrylsäure, 2,7 ml einer 1%igen wäßrigen Lösung von Diethylentriaminpentanatriumacetat, 1,5 g Ameisensäure und 1,7 g Kaliumpersulfat in 350 ml Wasser. Die Polymerisation wird bei 70°C durchgeführt. Man erhält eine perlförmige Polyacrylsäure. Der K-Wert des Natriumsalzes beträgt 119. Das wasserlösliche Produkt eignet sich u.a. als Schlichtemittel für Textilfasern und als Dispergiermittel.

Beispiel 7

Im Stahlkessel werden 1,6 l Cyclohexan, 2,9 g des Schutzkolloids D und 13 ml Wasser vorgelegt. Der Zulauf besteht aus einer Mischung von 322 ml Wasser, 227 g Acrylsäure, 125 g einer 50%igen wäßrigen Natronlauge, 0,03 g Diethylentriaminpentanatriumacetat, 0,2 Mol.-% Natriumpersulfat und, bezogen auf das Monomere, 3 Mol.-% Ameisensäure. Die Polymerisation wird bei 70°C durchgeführt. Es entsteht ein perlförmiges Polymerisat, das nicht staubt und einen K-Wert von 84 hat. Das wasserlösliche Produkt eignet sich u.a. als Schlichtemittel für Textilfasern und als Dispergiermittel.

Beispiel 8

Im Stahlkessel werden 1,6 l Cyclohexan, 2,9 g des Schutzkolloids B und 13 ml Wasser vorgelegt. Bei 70°C wird eine Monomerlösung bestehend aus 227 g Acrylsäure, 76 g Natriumhydroxid, 26 mg Diethylentriaminpentanatriumacetat, 4,7 g Ameisensäure und 1,7 g Ammoniumperoxidisulfat in 400 ml Wasser zugetropft. Es entsteht ein perlförmiges Copolymerisat aus Acrylsäure und Natriumacrylat vom K-Wert 90. Die Teilchengrößenverteilung ist in Tabelle 1 angegeben. Das wasserlösliche Produkt eignet sich u.a. als Schlichtemittel für Textilfasern und als Dispergiermittel.

Beispiel 9

Im Stahlkessel werden außer dem Cyclohexan 2,8 g des Schutzkolloids B und 20 ml Wasser vorgelegt. Der Zulauf besteht aus einer Lösung von 377 g Acrylamid sowie, bezogen auf Acrylamid, 650 ppm Ameisensäure, 360 ppm Diethylentriethylenpentanatriumacetat und 0,05 Mol.-%, 4,4'-Azobis(4-cyanpentansäure) in 420 ml Wasser. Die Polymerisation wird bei 50°C durchgeführt, danach wird das Reaktionsgemisch mit 60 mg Hydroxylammoniumsulfat und 2 g Natriumcarbonat, gelöst in 35 ml Wasser versetzt und azeotrop entwässert. Man erhält ein staubfreies perlenförmiges Polymerisat vom K-Wert 176. Das Polyacrylamid eignet sich beispielsweise als Flockungsmittel für Klärschlamm.

Beispiel 10

Die Polymerisation wird im Stahlkessel durchgeführt, in dem außer Cyclohexan noch 2,7 g des Schutzkolloids G vorgelegt werden. Die Vorlage wird auf 55°C erwärmt und bei dieser Temperatur gleichzeitig mit der Monomerlösung und mit 110 mg Kaliumpersulfat versetzt. Die Monomerlösung besteht aus 230 g Wasser, 376 g 50%iger wäßriger Acrylamidlösung, 45 g 97%iger wäßriger Acrylsäurelösung, 70 mg Diethylentriaminpentanatriumacetat, 30 mg Natriumhexametaphosphat, 0,3 g Triethylentetramin und 46 g 50%iger wäßriger Natronlauge. Durch Zugabe von 10%iger wäßriger Ammoniaklösung wird ein pH-Wert von 10 eingestellt und die gesamte Lösung zur Vorlage getropft. Nach Beendigung der Polymerisation fügt man 5 ml an 1%iger Hydroxylammoniumsulfatlösung zu end entwässert azeotrop. Das perlförmige Copolymerisat hat einen K-Wert von 238. Die Teilchengrößenverteilung ist in Tabelle 1 angegeben. Das wasserlösliche Produkt kann u.a. als Flockungsmittel für Klärschlämme eingesetzt werden.

Beispiel 11

Die Polymerisation erfolgt im Stahlkessel, in dem 1,6 l Cyclohexan, 3 g des Schutzkolloids D und 20 ml Wasser vorgelegt werden. Die Polymerisationstemperatur beträgt 65°C. Der Monomerzulauf besteht aus einer Mischung aus 175 g Wasser, 628 g 50%iger wäßriger Acrylamidlösung, 165 g Acrylsäure, 188 g 50%iger wäßriger Natronlauge und 0,3 g Diethylentriaminpentanatriumacetat. Die Monomerlösung enthält außerdem noch zusätzlich, jeweils auf die Monomeren bezogen, 0,1 Mol.-% Ameisensäure und 0,2 Mol.-% 2,2'-Azobis-(2-amidinopropan)-dihydrochlorid gelöst in 42 ml Wasser. Bezogen auf die eingesetzte Monomermenge fügt man vor Entwässerung dem Reaktionsgemisch noch 250 ppm Hydroxylammoniumsulfat und 0,8 % Natriumcarbonat in Form einer 5%igen wäßrigen Lösung zu. Man erhält ein perlförmiges Copolymerisat mit einem K-Wert von 245. Das wasserlösliche Produkt kann u.a. als Flockungsmittel für Klärschlämme eingesetzt werden.

Beispiel 12

Die Polymerisation wird im Stahlkessel bei 65°C durchgeführt. Die Vorlage besteht aus 1,6 l Cyclohexan und 3 g des Schutzkolloids B. Der Zulauf besteht aus einer Mischung von 190 g Acrylamid, 83 g Acrylsäure, 47 g Natriumhydroxid, 0,15 g Diethylentriaminpentanatriumacetat, 0,21 g Ameisensäure gelöst in 420 ml Wasser und 90 ml einer 2%igen wäßrigen Lösung, 2,2'-Azobis-(N,N'-dimethylenisobutyramidin)-dihydrochlorid. Im Anschluß an die Nachpolymerisation gibt man die in Beispiel 6 angegebene Menge an Hydroxylammoniumsulfat und Natriumcarbonat zu. Man erhält auf diese Weise ein perlförmiges Polymerisat vom K-Wert 223. Das wasserlösliche Produkt kann u.a. als Flockungsmittel für Klärschlämme eingesetzt werden.

Beispiel 13

Die Polymerisation wird im Glaskolben durchgeführt, in dem man Cyclohexan und, bezogen auf die eingesetzte Monomermenge, 0,9 % des Schutzkolloids B vorlegt. Die Monomerlösung besteht aus einer Mischung von 59 g Wasser, 192 g 50%iger wäßriger Acrylamidlösung, 30 g 80%iger wäßriger Lösung von N,N-Dimethylaminoethylacrylat-methochlorid, 3,5 g 1%iger wäßriger Lösung von Diethylentriaminpentanatriumacetat und 10,5 ml Ameisensäure. Sie wird kurz vor dem Dosieren noch mit 12 ml einer wäßrigen 3%igen Lösung von 2.2'-Azobis-(2-amidinopropan)-dihydrochlorid gemischt und bei 70 °C nach Art einer umgekehrten Suspensionspolymerisation polymerisiert. Man erhält ein perlförmiges Polymerisat eines K-Werts von 139. Das Polymere eignet sich zur Trockenverfestigung von Papier.

Beispiel 14

Die Polymerisation wird im Glaskolben bei 60°C durchgeführt. Man legt Cyclohexan und 1,1 g des Schutzkolloids B vor und polymerisiert eine Lösung von 240 g Dimethylaminoethylacrylat-methochlorid, 0,85 g Ameisensäure und 300 ppm 2,2'-Azobis-(2-amidinopropan)-dihydrochlorid gelöst in 360 ml Wasser. Man erhält kugelförmige Polymerteilchen. Das Polymerisat hat einen K-Wert von 109. Das Polymere eignet sich u.a. zur Trockenverfestigung von Papier.

Beispiel 15

Die Polymerisation erfolgt bei einer Temperatur von 60 °C im Glaskolben, in dem Cyclohexan und 1,1 g des Schutzkolloids B vorgelegt werden. Die Monomerlösung besteht aus einer Mischung von 85 g Acrylamid, 46 g N,N-Dimethylaminoethylacrylat-hydrochlorid, 200 ppm Diethylentriaminpentanatriumacetat; 1,2 Mol.-% Ameisensäure, bezogen auf die eingesetzten Monomeren, und 0,5 g 2,2'-Azobis-(2-amidinopropan)-dihydrochlorid gelöst in 225 g Wasser. Das perlförmige Copolymerisat hat einen K-Wert von 186. Das Polymere eignet sich als Flockungs-, Retentions- und Entwässerungsmittel bei der Herstellung von Papier sowie zur Flockung von Klärschlämmen.

Beispiel 16

Copolymere aus Acrylamid und Dimethylaminoethylacrylat-sulfat erhält man nach der in Beispiel 15 beschriebenen Vorschrift, wenn man das dort verwendete Dimethylaminoethylacrylat-hydrochlorid äquimolar gegen Dimethylaminoethylacrylat-sulfat austauscht. Unter gleichen Polymerisationsbedingungen wie in Beispiel 15 erhält man ein perlenförmiges Polymerisat vom K-Wert 173. Das Polymere eignet sich als Flockungs-, Retentions- und Entwässerungsmittel bei der Herstellung von Papier sowie zur Flockung von Klärschlämmen.

Beispiel 17

Die Polymerisation erfolgt im Glaskolben bei 60°C. Außer 800 ml Cyclohexan werden 0,95 g des Schutzkolloids B vorgelegt. Die Polymerisationstemperatur beträgt 60°C. Als Zulauf wird eine Mischung aus der im folgenden beschriebenen Monomerlösung und 8 ml einer 3%igen wäßrigen Lösung von 2,2'-Azobis-(2-amidinopropan)-dihydrochlorid dosiert. Die Monomerlösung besteht aus einer Mischung von 110 g Wasser, 161, 2 g 50%iger wäßriger Acrylamidlösung, 42 g N,N-Diethylaminoethylacrylat, 28 g konzentrierter Salzsäure sowie, bezogen auf die eingesetzten Monomeren 100 ppm Diethylentriaminpentanatriumacetat und 0,45 Mol.-% AmeisensäureMan erhält ein perlenförmiges Polymerisat vom K-Wert 212. Das Polymere eignet sich als Flockungs-, Retentions- und Entwässerungsmittel bei der Herstellung von Papier sowie zur Flockung von Klärschlämmen.

Beispiel 18

Man verfährt wie in Beispiel 17, tauscht jedoch das basische Monomer durch die äquimolare Menge Diethylaminoethylacrylat-sulfat aus. Man erhält ein Polymerisat, das einen K-Wert von 187 hat. Die entstehenden Polymerteilchen sind kugelförmig. Das Polymere eignet sich als Flockungs-, Retentions- und Entwässerungsmittel bei der Herstellung von Papier sowie zur Flockung von Klärschlämmen.

Beispiel 19

Im Glaskolben werden Cyclohexan und 1,8 g des Schutzkolloids F vorgelegt. Die Polymerisationstemperatur beträgt 60 °C. Die Monomerlösung besteht aus 245 g Wasser, 55,5 g N,N-Diethylaminoethylacrylat-methosulfat, 120 g Acrylamid, 85 mg Diethylentriaminpentanatriumacetat und 1,1 g Ameisensäure sowie 20 ml einer wäßrigen Lösung von 0,1 Mol.-%, 2,2'-Azobis-(2-amidinopropan)-dihydrochlorid, bezogen auf die eingesetzten Monomeren. Man erhält ein perlenförmiges Polymerisat vom K-Wert 142, mit der in Tabelle 1 angegebenen Korngrößenverteilung. Das Polymere eignet sich u.a. für

die Trockenverfestigung von Papier.

Beispiel 20

In der Glasapparatur werden 800 ml Cyclohexan und 1,5 g des Schutzkolloids B vorgelegt. Als Zulauf in eine Lösung von je 124,5 g N-Vinylpyrrolidon und N,N-Dimethylaminoethylacrylat-methochlorid sowie, bezogen auf die Monomeren, 120 ppm Diethylentriaminpentanatriumacetat, 1 Mol.-% Ameisensäure und 0,5 Mol.-%, 2,2'-Azobis-(2-amidinopropan)-dihydrochlorid in 175 ml Wasser hergestellt. Die Polymerisation erfolgt bei 60°C. Man erhält ein Polymerisat mit einem K-Wert 109, das aus perlenförmigen Teilchen besteht.

Beispiel 21

Zu der in Beispiel 20 beschriebenen Vorlage wird eine Lösung aus 33,2 g Methacrylamid, 133 g N,N-Dimethylaminoethylacrylat-methochlorid, 12 mg Diethylentriaminpentanatriumacetat und 0,3 g 2,2'-Azobis-(2-amidinopropan)-dihydrochlorid in 183 ml Wasser gegeben. Die Polymerisationstemperatur beträgt 50 °C. Das Polymere fällt in kleinen, kugelförmigen Teilchen an und hat einen K-Wert von 143.

Beispiel 22

Im Stahlkessel werden 1,6 l Cyclohexan und, bezogen auf die eingesetzte Monomermenge, 1 Gew.-% des Schutzkolloids B vorgelegt. Der Zulauf besteht aus 800 g einer 50%igen wäßrigen Lösung von 336 g Natriummethacrylat und 64 g Methacrylsäure sowie 6,5 g Ameisensäure. Die Monomerenlösung wurde mit 84 ml einer 3%igen wäßrigen Kaliumperoxidisulfatlösung gemischt und bei 70°C polymerisiert. Man erhält kugelförmige Polymerteilchen mit einem K-Wert von 78.

Beispiel 23

Im Glaskolben werden 800 ml Cyclohexan und 1,3 g des Schutzkolloids D vorgelegt. Der Monomerzulauf besteht aus 180 g Wasser, 60 g Acrylamid, 60 g Natriumsalz der 2-Acrylamido-2-methylpropansulfonsäure, 30 mg Diethylentriaminpentanatriumacetat, 3 g Ameisensäure und 0,5 g Kaliumperoxidisulfat. Die Polymerisation wird bei 60°C durchgeführt. Man erhält ein perlenförmiges Polymerisat vom K-Wert 83.

Beispiel 24

Im Glaskolben werden 800 ml Cyclohexan und 1,4 g des Schutzkolloids B vorgelegt. Die Monomerlösung bestand aus einer Mischung von 50 g. Acrylsäure, 50 g Vinylphosphonsäure, 0,02 g Diethylentriaminpentanatriumacetat, 0,1 g Ameisensäure und 160 ml Wasser. Der Zulauf wird mit 25 ml einer 3%igen wäßrigen Lösung von 2,2'-Azobis-(2-amidinopropan)-dihydrochlorid vermischt und nach der oben angegebenen allgemeinen Vorschrift bei 60°C polymerisiert. Das perlenförmige Produkt hat einen K-Wert von 60.

Vergleichsbeispiel 1

Beispiel 8 wird mit der Ausnahme wiederholt, daß man 2,9 g des Schutzkolloids I anstelle des dort verwendeten Schutzkolloids B einsetzt. Die polymerisation wird bei 70°C durchgeführt. Das perlenförmige Produkt hat einen K-Wert von 94. Die Teilchengrößenverteilung ist in Tabelle 1 angegeben.

Vergleichsbeispiel 2

Beispiel 10 wird mit der Ausnahme wiederholt, daß anstelle des dort angegebenen Schutzkolloids G 2,7 g des Schutzolloids I verwendet werden. Man erhält ein perlförmiges Produkt vom K-Wert 245, mit der in Tabelle 1 angegebenen Teilchengrößenverteilung.

Tabelle 1: Teilchengrößenverteilungen

| Polymerisation nach | Gew.-Anteil [%] der Teilchengröße [µm] <63 | 63-125 | 125-250 | 250-500 | 500-710 | 710-1000 | >1000 |
|---|---|---|---|---|---|---|---|
| Beispiel 1 | 0,2 | 2,48 | 34,92 | 59,70 | 1,62 | 0,61 | 0,47 |
| Beispiel 8 | 0,1 | 1,4 | 30,1 | 65,4 | 2,9 | 0,1 | 0 |
| Beispiel 10 | 0,4 | 3,0 | 26,9 | 69,2 | 0,4 | 0,1 | 0 |
| Beispiel 11 | 0,22 | 1,26 | 7,73 | 57,63 | 29,88 | 2,79 | 0,49 |
| Vergleichsbeispiel 1 | 0,4 | 2,1 | 27,7 | 57,9 | 9,4 | 0,8 | 1,7 |
| Vergleichsbeispiel 2 | 0 | 0,2 | 3,8 | 19,5 | 38,4 | 34,2 | 3,9 |
| Beispiel 19 | 0 | 0,4 | 3,7 | 45,1 | 43,6 | 6,7 | 0,5 |

Beispiel 25

In einem 2 l-Kolben, der mit Rührer, Thermometer, Rückflußkühler, Enleitungsrohr für Inertgas und Zulaufgefäßen ausgestattet ist, werden 1280 ml Cyclohexan, 0,8 g des Schutzkolloids H und 30 ml Wasser vorgelegt und auf 60°C erwärmt. Durch Erniedrigung des Drucks wird der Kolbeninhalt zum Sieden unter Rückfluß gebracht. Eine zuvor bereitete Lösung aus 60 g N-Vinylformamid, 40 g einer 50 Gew.-%igen wäßrigen Acrylamidlösung und 1,75 g einer 1%igen wäßrigen Lösung des Pentanatriumsalzes der Diethylentriaminpentaessigsäure, zu der man noch 0,4 g 2,2'-Azobis-(2-amidinopropan)hydrochlorid zufügt und mit Ammoniak auf pH von 8 einstellt, wird innerhalb einer Stunde unter Rühren in die siedende Vorlage getropft. Nach Zugabe der Monomeren- und Initiatorlösung wird das Reaktionsgemisch noch eine Stunde nachpolymerisiert. Anschließend entfernt man das Wasser azeotrop und filtriert das perlförmige Polymerisat ab. Es ist gut rieselfähig und hat eine Teilchengröße von 0,1 bis 0,3 mm. Der K-Wert des Copolymerisats beträgt 149.

Beispiel 26

Man verfährt wie in Beispiel 25 angegeben, gibt jedoch in die Vorlage 1000 ml Cyclohexan und 1,27 g des Schutzkolloids B und verwendet als Zulauf eine Mischung aus 258 g entionisiertem Wasser, 260 g N-Vinylformamid, 1,82 g Ameisensäure und 1,3 g 2,2'-Azobis(2-amidino-propan)--hydrochlorid. Die Lösung des Zulaufs wird durch Zugabe von Ammoniak auf pH 8 eingestellt. Die Polymerisation erfolgt wie in Beispiel 25 angegeben. Man erhält ein gut rieselfähiges, perlförmiges und staubfreies Polymerisat, das einen K-Wert von 172 und eine Teilchengröße von 0,1 bis 0,35 mm hat.

Beispiel 27

Man verfährt wie in Beispiel 26 angegeben, verwendet jedoch 1,34 g des Schutzkolloids E und polymerisiert eine Monomerenmischung bestehend aus 25,2 g entionisiertem Wasser, 200 g einer 50 gew.%igen wäßrigen Acrylamidlösung, 0,56 g Ameisensäure, 3,55 g einer 1%igen wäßrigen Pentanatriumsalzlösung der Diethylentriaminpentaessigsäure, 25 g N-Vinylmethylimidazolin, stellt mit ca. 23 g konzentrierter Salzäure auf pH 3,5 ein und versetzt mit 0,625 g 2,2'-Azobis(2-amidinopropan)hydrochlorid. Der Sauerstoff wird durch Einleiten von Stickstoff aus der Monomerlösung entfernt, die dann innerhalb einer Stunde zu der auf 60°C erwärmten und unter vermindertem Druck siedenden Vorlage gegeben wird. Die Nachpolymerisation erfolgt nach einer Stunde bei 60°C unter Rückflußsieden. Danach wird das Wasser azeotrop abdestilliert. Man erhält ein perlenförmiges Polymerisat, das abfiltriert und getrocknet wird. Es besitzt einen K-Wert von 169 und hat eine Korngröße von 0,1 bis 0,4 mm.

**Patentansprüche**

1. Verfahren zur Herstellung von perlförmigen Polymerisaten aus wasserlöslichen, ethylenisch ungesättigten Monomeren durch umgekehrte Suspensionspolymerisation einer Suspension aus einer wäßrigen Lösung der Monomeren in einer inerten hydrophoben Flüssigkeit in Gegenwart von Polymerisationsinitiatoren und Schutzkolloiden, dadurch gekennzeichnet, daß man als Schutzkolloid Pfropfpolymerisate einsetzt, die erhältlich sind durch Pfropfen von Polymerisaten (A), die
a) 40 bis 100 Gew.-% monovinylaromatische Monomere,

b) 0 bis 60 Gew.-% monoethylenisch ungesättigte Carbonsäuren mit 3 bis 6 C-Atomen, Maleinsäureanhydrid und/oder Itaconsäureanhydrid und
c) 0 bis 20 Gew.-% andere monoethylenisch ungesättigte Monomere, mit der Maßgabe einpolymerisiert enthalten, daß die Summe der Gewichtsprozente (a) bis (c) immer 100 beträgt, die Polymerisate A) ein Molekulargewicht (Zahlenmittel) von 500 bis 20 000 und Hydrierjodzahlen (nach DIN 53 241) von 1,3 bis 51 aufweisen, mit Monomermischungen aus
(1) 70 bis 100 Gew.-% Acrylsäureester und/oder Methacrylsäureester von 1 bis 20 C-Atome enthaltenden einwertigen Alkoholen,
(2) 0 bis 15 Gew.-% monoethylenisch ungesättigten Carbonsäuren mit 3 bis 6 C-Atomen, Maleinsäureanhydrid und/oder Itaconsäureanhydrid,
(3) 0 bis 10 Gew.-% Acrylsäuremonoester und/oder Methacrylsäuremonoester von mindestens zweiwertigen Alkoholen,
(4) 0 bis 15 Gew.-% monovinylaromatischen Monomoren und
(5) 0 bis 7,5 Gew.-% Acrylamid und/oder Methacrylamid, mit der Maßgabe, daß die Summe der Gewichtsprozente (1) bis (5) immer 100 beträgt,
bei Temperaturen bis zu 150°C in einem inerten hydrophoben Verdünnungsmittel in Gegenwart von Polymerisationsinitiatoren, wobei die Monomoren in einer Menge von 97,5 bis 50 Gew.-%, bezogen auf die Mischung aus Polymerisat (A) und Monomeren, eingesetzt werden.

2. Verfahren nach Anspruch 1, dadurch gekennzeichnet, daß man als Schutzkolloid Pfropfpolymerisate einsetzt, die durch Pfropfen von Polymerisaten A), die
a) 60 bis 95 Gew.-% Styrol und
b) 5 bis 40 Gew.-% Acrylsäure, Methacrylsäure oder deren Mischungen einpolymerisiert enthalten,
mit Monomermischungen aus
(1) 100 bis 92,5 Gew.-% Acrylsäureester und/oder Methacrylsäureester von einwertigen 3 bis 6 C-Atome enthaltenden Alkoholen und
(2) 0 bis 7,5 Gew.-% Acrylsäure, Methacrylsäure, Maleinsäureanhydrid oder Itaconsäureanhydrid
erhältlich sind.

3. Verfahren nach Anspruch 2, dadurch gekennzeichnet, daß man als Schutzkolloid Pfropfpolymerisate einsetzt, die durch Pfropfen von Polymerisaten A) mit Monomermischungen aus
(1) 85 bis 98 Gew.-% tert.-Butylacrylat, n-Butylacrylat, Isobutylacrylat oder deren Mischungen,
(2) 1 bis 7,5 Gew.-% Acrylsäure, Methacrylsäure, Maleinsäureanhydrid oder Itaconsäureanhydrid und
(3) 1 bis 7,5 Gew.-% Styrol
erhältlich sind.

4. Verfahren nach den Ansprüchen 1 bis 3, dadurch gekennzeichnet, daß die Polymerisate A) Molekulargewichte (Zahlenmittel) von 1000 bis 10 000 und Hydrierjodzahlen (nach DIN 53 241) von 2,5 bis 25,4 aufweisen.

5. Verfahren nach den Ansprüchen 1 bis 4, dadurch gekennzeichnet, daß als wasserlösliche, ethylenisch ungesättigte Monomere ethylenisch ungesättigte $C_3$- bis $C_6$- Carbonsäuren, deren Alkalimetall- und/oder Ammoniumsalze, deren Amide, Di-$C_1$-bis $C_3$-alkyldiallylammoniumsalze, protonierte oder quaternierte Di-$C_1$- bis $C_3$-alkylamino-$C_2$- bis $C_6$-(meth)acrylate, N-Vinylpyrrolidone, N-Vinylimidazole, N-Vinylimidazoline und Mischungen der Monomeren polymerisiert werden.

**Claims**

1. A process for preparing a polymer in bead form from water-soluble, ethylenically unsaturated monomers by reverse suspension polymerization of a suspension of an aqueous solution of the monomers in an inert hydrophobic liquid in the presence of a polymerization initiator and of a protective colloid, which comprises using as the protective colloid a graft polymer obtainable by grafting a polymer (A) containing
a) from 40 to 100% by weight of an aromatic monovinyl monomer,
b) from 0 to 60% by weight of a monoethylenically unsaturated carboxylic acid of 3 to 6 carbon atoms, maleic anhydride or itaconic anhydride and
c) from 0 to 20% by weight of other monoethylenically unsaturated monomers,
as copolymerized units, with the proviso that the sum of the weight percentages (a) to (c) is always 100 and the polymer A) has a molecular weight (number average) from 500 to 20,000 and a hydrogenation iodine number (as defined in German Standard Specification DIN 53,241) from 1.3 to 51 with a monomer mixture of
(1) from 70 to 100% by weight of an acrylic ester or methacrylic ester of a monohydric alcohol containing from 1 to 20 carbon atoms,
(2) from 0 to 15% by weight of a monoethylenically unsaturated carboxylic acid of 3 to 6 carbon atoms, maleic anhydride or itaconic anhydride,
(3) from 0 to 10% by weight of an acrylic monoester or methacrylic monoester of a not less than dihydric alcohol, (4) from 0 to 15% by weight of an aromatic monovinyl monomer and (5) from 0 to 7.5% by weight of acrylamide or methacrylamide, with the proviso that the sum of the weight percentages (1) to (5) is always 100, at up to 150°C in an inert hydrophobic diluent in the presence of a polymerization initiator, the monomers being used in an amount from 97.5 to 50% by weight, based on the mixture of polymer

A) and monomers.

2. A process as claimed in claim 1, wherein the protective colloid used is a graft polymer obtainable by grafting a polymer A) containing
a) from 60 to 95% by weight of styrene and
b) from 5 to 40% by weight of acrylic acid, methacrylic acid or a mixtüre thereof as copolymerized units, with a monomer mixture of
1) from 100 to 92.5% by weight of an acrylic ester or methacrylic ester of a monohydric alcohol containing from 3 to 6 carbon atoms and
2) from 0 to 7.5% by weight of acrylic acid, methacrylic acid, maleic anhydride or itaconic anhydride.

3. A process as claimed in claim 2, wherein the protective colloid used is a graft polymer obtainable by grafting polymer A) with a monomer mixture of
(1) from 85 to 98% by weight of tert-butyl acrylate, n-butyl acrylate, isobutyl acrylate or a mixture thereof,
(2) from 1 to 7.5% by weight of acrylic acid, methacrylic acid, maleic anhydride or itaconic anhydride and
(3) from 1 to 7.5% by weight of styrene.

4. A process as claimed in any of claims 1 to 3, wherein polymer A) has a molecular weight (number average) from 1,000 to 10,000 and a hydrogenation iodine number (as defined in German Standard Specification DIN 53, 241) from 2.5 to 25.4.

5. A process as claimed in any of claims 1 to 4, wherein the water-soluble, ethylenically unsaturated monomers which are polymerized comprise ethylenically unsaturated $C_3$-$C_6$-carboxylic acids, their alkali metal or ammonium salts, their amides, di-$C_1$-$C_3$-alkyldiallylammonium salts, protonated or quaternized di-$C_1$-$C_3$-alkylamino $C_2$-$C_6$-(meth)acrylates, N-vinylpyrrolidone, N-vinylimidazole, N-vinylimidazoline and mixtures thereof.

## Revendications

1. Procédé de préparation de polymères sous forme de perles à partir de monomères à insaturation éthylénique, solubles dans l'eau, par polymérisation en suspension inversée d'une suspension d'une solution aqueuse des monomères dans un liquide hydrophobe, inerte, en présence d'amorceurs de polymérisation et de colloïdes protecteurs, caractérisé en ce qu'à titre de colloïde protecteur, on met en oeuvre des polymères de greffage, que l'on peut obtenir par le greffage de polymères (A) qui contiennent, incorporés par polymérisation,
(a) de 40 à 30% en poids de monomères monovinylaromatiques,
(b) de 0 à 60% en poids d'acides carboxyliques à insaturation monoéthylénique qui comportent de 3 à 6 atomes de carbone, d'anhydride maléique et/ou d'anhydride itaconique et
(c) 0 à 20% en poids d'autres monomères à insaturation éthylénique,
avec la condition que la somme des pourcentages pondéraux (a) à (c) soit toujours égale à 100, les polymères (A) possèdent un poids moléculaire (moyenne en nombre) de 5 à 20 000 et des indices d'iode d'hydrogénation (selon DIN 53241) de 1,3 à 51, avec des mélanges de monomères constitués de
(1) 70 à 100% en poids d'esters de l'acide acrylique et/ou d'esters de l'acide méthacrylique, d'alcools monohydroxylés contenant de 1 à 20 atomes de carbone,
(2) 0 à 15% en poids d'acides carboxyliques à insaturation monoéthylénique qui comportent de 3 à 6 atomes de carbone, d'anhydride maléique et/ou d'anhydride itaconique,
(3) 0 à 10% en poids de monoesters de l'acide acrylique et/ou de monoesters de l'acide méthacrylique d'alcools au moins dihydroxylés,
(4) 0 à 15% en poids de monomères monovinylaromatiques et
(5) 0 à 7,5% en poids d'acrylamide et/ou de méthacrylamide,
avec la condition que la somme des pourcentages pondéraux (1) à (5) atteigne toujours 100, à des températures allant jusqu'à 150°C, dans un diluant hydrophobe, en présence d'amorceurs de polymérisation, où l'on met les monomères en oeuvre en une proportion de 97,5 à 50% en poids, par rapport au mélange du polymère (A) et des monomères.

2. Procédé suivant la revendication 1, caractérisé en ce qu'à titre de colloïde protecteur, on met en oeuvre des polymères de greffage que l'on peut obtenir par le greffage de polymères (A) qui contiennent, incorporés par polymérisation,
a) 60 à 95% en poids de styrène et
b) 5 à 40% en poids d'acide acrylique, d'acide méthacrylique ou de leurs mélanges,
avec des mélanges de monomères constitués de
(1) 100 à 92,5% en poids d'esters de l'acide acrylique et/ou d'esters de l'acide méthacrylique d'alcools monohydroxylés qui contiennent de 3 à 6 atomes de carbone et
(2) 0 à 7,5% en poids d'acide acrylique, d'acide méthacrylique, d'anhydride maléique, ou d'anhydride itaconique.

3. Procédé suivant la revendication 2, caractérisé en ce qu'à titre de colloïde protecteur, on met en oeuvre des polymères de greffage que l'on peut obtenir par le greffage de polymères (A) avec des mélanges de monomères constitués de
(1) 85 à 98% en poids d'acrylate de tert-butyle, d'acrylate de n-butyle, d'acrylate d'isobutyle, ou de leurs

mélanges,
(2) 1 à 7,5% en poids d'acide acrylique, d'acide méthacrylique, d'anhydride maléique, ou d'anhydride itaconique et
(3) 1 à 7,5% en poids de styrène.

4. Procédé suivant les revendications 1 à 3, caractérisé en ce que les polymères (A) présentent des poids moléculaires (moyenne en nombre) de 1000 à 10 000 et des indices d'iode d'hydrogénation (selon DIN 53241) de 2,5 à 25,4.

5. Procédé suivant les revendications 1 à 4, caractérisé en ce qu'à titre de monomères à insaturation éthylénique, solubles dans l'eau, on polymérise des acides carboxyliques en $C_3$–$C_6$, à insaturation éthylénique, leurs sels de métaux alcalins et/ou d'ammonium, leurs amindes, des sels d'alkyl($C_1$–$C_3$)diallylammonium, des (méth)acrylates de dialkyl($C_1$–$C_3$)aminoalkyle($C_2$–$C_3$), des N-vinylpyrrolidones, des N-vinylimidazoles, des N-vinylimidazolines et des mélanges des monomères.